# EUROPEAN PATENT APPLICATION

(11) **EP 1 918 831 A1**
(43) Date of publication of application: **07.05.2008**
(21) Application number: 07119730.5
(22) Date of filing: 31.10.2007
(51) Int. Cl.: G06F 17/30

(54) **Information processing apparatus, information processing method and information processing program**

(30) Priority: 31.10.2006 JP 2006295439
(71) Applicant: Fujitsu Ltd., Kawasaki-shi, Kanagawa 211-8588 (JP)
(72) Inventor: Morita, Daisuke, Kawasaki-shi, Kanagawa 211-8588 (JP); Kumazawa, Takeshi, Kawasaki-shi, Kanagawa 211-8588 (JP)
(74) Representative: Fenlon, Christine Lesley

(57) **Abstract**

Included are a request unit 17 requesting, when receiving a trigger occurring based on a command from a user and a predetermined time schedule, a Website 5 originating information via a communication network 4 to transmit an RSS feed defined as metadata of update information of the Website 5, an extracting unit 19 referring to the content of the RSS feed transmitted from the Website 5 and extracting the useful information as the information that should be provided to the user from within the RSS feed, and a display unit 3 displaying the extracted useful information.

## Description

### BACKGROUND OF THE INVENTION

An information processing apparatus, an information processing method and an information processing program are illustrated.

Nowadays, various categories of information are distributed from Websites on the Internet. A user selects a necessary Website from within a multiplicity of Websites, and browses the information distributed therefrom. Further, the user periodically browses the favorite Website and checks whether newly updated information exists or not.

The user , if there exists the multiplicity of Websites from which the latest information is desired to be always grasped by the user, frequently browses these multiple Websi tes and needs to check whether the updated information exists or not. An operation of frequently browsing the multiplicity of Websites heavily burdens the user and brings about an increase in information quantity (traffic) flowing across communication networks. Such being the case, there is proposed a technology of reducing the burdens on the user and on the communication networks by periodically navigating the Websites and acquiring only RSS feed (Rich Site Summary Feed) defined as metadata of update information distributed from each of the Websites.

### SUMMARY OF THE INVENTION

These technologies, however, have the following problems. Namely according to the technologies given above, when the information of the specified Website designated by the user is updated, the RSS feed is indiscriminately distributed and provided to the user irrespective of the content of the updated information. Hence, such a case might happen that even the updated information etc of the favorite Website designated by the user is mixed with information unnecessary to the user. For example, if the user designates a Website for user support of a personal computer purchased by the user himself or herself and if information about an update of software is described on the user support Website, it follows that such a piece of update information is indiscriminately provided to the user even in the case of information on software unused in the PC model purchased by the user. Thus, each time the unnecessary updated information is provided, the user is urged to check the content of each piece of information, which is time-consuming.

It is therefore desirable to provide an information processing apparatus, an information processing method and an information processing program that display a content of the RSS feed useful to the user.

For solving the problems given above, the useful information, which should be provided to the user, is extracted from within the RSS feed transmitted from the Website.

To give an in-depth description, an information processing apparatus comprises: a request unit requesting, when receiving a trigger etc occurring based on a command from a user or a predetermined time schedule, a Website originating information via a communication network to transmit an RSS feed defined as metadata of update information of the Website; an extracting unit referring to the content of the RSS feed transmitted from the Website and extracting the useful information as the information that should be provided to the user from within the RSS feed; and a display unit displaying the extracted useful information.

A premise is that the information processing apparatus is connected to a communication network and is enabled to perform communications with the Website connected to the communication network. The information processing apparatus comprises the request unit, the extracting unit and the display unit, and the extracting unit refers to the content of the RSS feed transmitted from the Website and extracts the useful information, which should be provided to the user, from within the RSS feed.

The request unit, upon receiving the trigger etc occurring based on the command given from the user or the predetermined time schedule, requests the Website to transmit the RSS feed. Timing at which to request the Website to transmit the RSS feed may be any kind of timing and is exemplified such as the timing based on the command given from the user or once per hour based on the time schedule. Herein, the RSS feed is the metadata of the information originated from the Website and is exemplified by the updated information etc of the Website that is described in an RSS format. Further, the metadata is data concerning an outline of the information originated by the Website and is data suchas an update date/time, a title, a creator and a summary.

The extracting unit refers to the content of the RSS feed transmitted from the Website and extracts the useful information that should be provided to the user. The extraction of the useful information can be exemplified by, for example, extracting the useful information depending on whether or not a keyword preset by the user is contained in the content of the RSS feed and whether or not the information related to the devices building up the information processing apparatus is contained in the content of the RSS feed. Herein, the useful information is the information extracted from within the RSS feed by the extracting unit and is, e.g., the information useful to the user.

The display unit displays the useful information extracted by the extracting unit to the user.

As described above, according to the information processing apparatus, it is possible to display the content of the RSS feed useful to the user.

Further, the information processing apparatus may further comprise an attribute acquiring unit acquiring attribute information, corresponding to the user employing the information processing apparatus or devices building up the information processing apparatus, such as a software version, a device version or favorites of information sites frequently browsed by the user, wherein the RSS feed transmitted by the Website may contain first extracting condition information in which to define an extracting condition when extracting the useful information, and the extracting unit may collate the content of the RSS feed, the attribute information and the first extracting condition information with each other, and, if the extracting condition of the first extracting condition information satisfies the attribute information, may extract, as the useful information, the content of the RSS feed corresponding to the first extracting condition information.

Generally, the information updated on the Website is, in many cases, mixed with the information necessary to the user who browses the information and with information unnecessary. For example, in the case of support information provided to the users who purchased personal computers, the necessary information and the unnecessary information are intermingled depending on specifications, versions, etc of the purchased personal computers, such as [We would ask our customers purchasing the personal computers for a period of A through B to immediately perform the update.]

Such being the case, the information processing apparatus further comprises the attribute acquiring unit in addition to the request unit, the extracting unit and the display unit described above. Further, the RSS feed transmitted by the Website contains the first extracting condition information.

The attribute acquiring unit acquires the attribute information corresponding to the user who uses the information processing apparatus and the devices etc building up the information processing apparatus. Theattributeinformation is data that is referred to when the extracting unit extracts the useful information from within the RSS feed, and is data such as versions of software and of the devices employed by the user and favorites of information sites frequently browsed by the user. To describe it based on the example given above, in the case of transmitting the content of the RSS feed saying that [We would ask our customers purchasing the personal computers for a period of A through B to immediately perform the update.], the attribute acquiring unit acquires a sales period of the information processing apparatus. It should be noted that as for the sales period of the information processing apparatus, such a method is exemplified as to acquire the sales period by getting a manufacturer' s serial number in a way that refers to a file etc recorded with a property of the information processing apparatus and by requesting the user to input the purchase time.

The RSS feed transmitted by the Website contains the first extracting condition information in which to define the extracting condition on the occasion of extracting the useful information. Herein, the first extracting condition information connotes data sent together with the RSS feed transmitted from the Website and is information about, e.g., the user to whom the content of the RSS feed should be provided and information about the device version etc. To give the explanation based on the example described above, in the case of the content of the RSS feed saying that [We would ask our customers purchasing the personal computers for a period of A through B to immediately perform the update.], the first extracting condition information becomes the extracting condition having a content showing that "the information is displayed to only the users employing the information processing apparatuses purchased for the period of A through B.".

The extracting unit, when receiving the content of the RSS feed transmitted from the Website and the first extracting condition information, searches out the attribute information and the content of the RSS feed, which satisfies the extracting condition of the first extracting condition information, as the useful information. To describe it based on the example given above, in the case where the first extracting condition information is that "the information is displayed to only the users employing the information processing apparatuses purchased for the period of A through B.", if the attribute information is that "the present information processing apparatus is the apparatus purchased at the time A", the content of the RSS feed is extracted as the useful information that should be provided to the user.

As described above, according to the information processing apparatus, the proper content of the RSS feed corresponding to each user can be displayed.

Moreover, the information processing apparatus may further comprise a storage unit stored with second extracting condition information in which to define an extracting condition when extracting the useful information, wherein the extracting unit may collate the content of the RSS feed with the second extracting condition information, and may extract, as the useful information, the content of the RSS feed that satisfies the extracting condition of the second extracting condition information.

As stated above, the information updated on the Website is in many cases intermingled with the information necessary to the user who browses the information and with the unnecessary information. Such being the case, the information processing apparatus further comprises the storage unit stored with the second extracting condition information in addition to the request unit, the extracting unit and the display unit described above.

The second extracting condition information defines the extracting condition on the occasion of extracting the content of the RSS feed in the same way as the above-mentioned. A different point between the first extracting condition information and the second extracting condition information is that the first extracting condition information is transmitted from the Website, while the second extracting condition information is stored in the storage unit provided in the information processing apparatus. Accordingly, when extracting the useful information, which should be provided to the user, from within the RSS feed transmitted from the Website, the useful information can be extracted by referring to the second extracting condition information stored in the storage unit within the information processing apparatus. Further, the second extracting condition information is stored in the storage unit within the information processing apparatus, and hence the extracting condition defined in the second extracting condition information can be changed corresponding to the user's own favorites . Herein, the second extracting condition information is data stored in the storage unit and is data related to, e.g., a category etc of the RSS feed desired to be browsed and then set by the user.

As described above, according to the information processing apparatus, the proper content of the RSS feed corresponding to each user can be displayed.

Still further, an information processing method comprises: a request step of requesting, when receiving a trigger etc occurring based on a command from a user or a predetermined time schedule, a Website originating information via a communication network to transmit an RSS feed defined as metadata of update information of the Website; an extracting step of referring to the content of the RSS feed transmitted from the Website and extracting the useful information as the information that should be provided to the user from within the RSS feed; and a display step of displaying the extracted useful information.

Yet further, an information processing program making a computer execute: a request step of requesting, when receiving a trigger etc occurring based on a command from a user or a predetermined time schedule, a Website originating information via a communication network to transmit an RSS feed defined as metadata of update information of the Website; an extracting step of referring to the content of the RSS feed transmitted from the Website and extracting the useful information as the information that should be provided to the user from within the RSS feed; and a display step of displaying the extracted useful information.

It is feasible to provide the information processing apparatus, the information processing method and the information processing program that display the content of the RSS feed useful to the user.

### BRIEF DESCRIPTION OF THE DRAWINGS

FIG.1 is a diagram of a whole configuration of an information processing apparatus;
FIG.2 is a flowchart of processing by the information processing apparatus;
FIG. 3 is a diagram of one example of attribute information;
FIG. 4 is a diagram of one example of user registration information;
FIG.5 is a diagram of one example of a content of an RSS feed;
FIG. 6 is a diagram of one example of a content of first extracting condition information.

### DETAILED DESCRIPTION OF THE INVENTION

An information processing apparatus, an information processing method and an information processing program according to a preferred embodiment, will hereinafter be described with reference to the drawings. The present embodiment shows exemplifications, and there are no limits to these exemplifications.

### <Configuration>

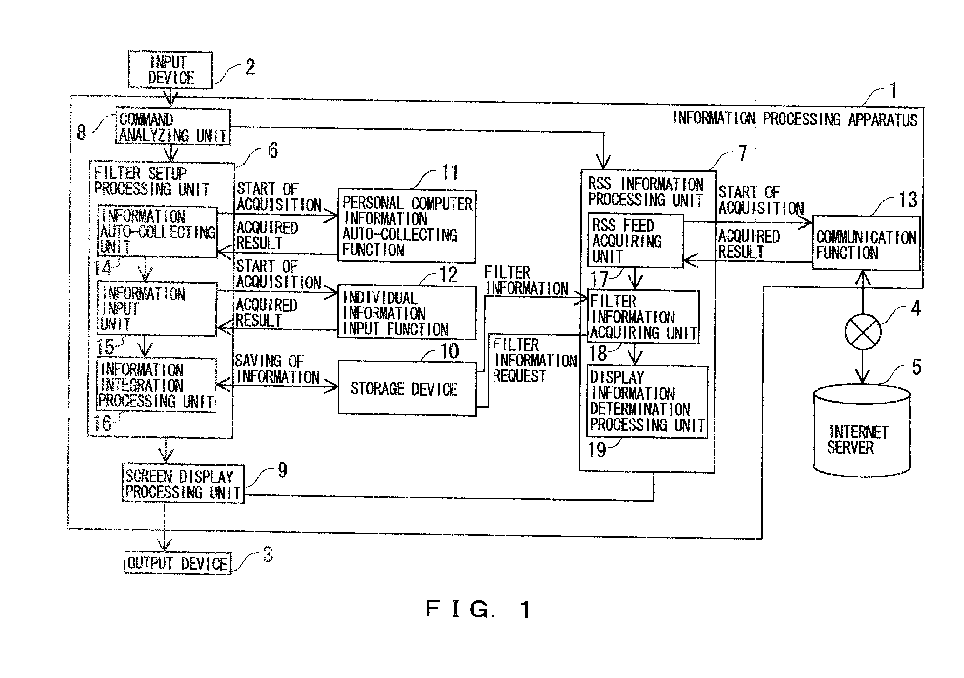

FIG. 1 is a diagram of a whole configuration, showing an information processing apparatus 1 according to the present embodiment, and also showing an input device 2, an output device 3, a communication network 4 and an Internet server 5, which are connected to the information processing apparatus 1. As illustrated in FIG. 1, the input device 2 for inputting commands from a user and the output device 3 (corresponding to [a display unit]) that displays the information to the user, are connected to the information processing apparatus 1. Further, the information processing apparatus 1 is connected to the communication network 4 and is so configured as to be enabled to access the Internet server 5 via the communication network 4. Note that two or mere Internet servers 5 may be, though only one Internet server 5 is illustrated, connected to the communication network 4. Moreover, one or two or more Websites are built up within each Internet server 5.

The information processing apparatus 1 is constructed of a personal computer including a CPU (Central Processing Unit), a memory, input/output interfaces, a hard disk storage device, etc, wherein the CPU executes a computer program, and hardware resources establish cooperative linkups with each other, thereby realizing a variety of functions that will be explained later on. The information processing apparatus 1 is based on the premise that the respective applications run on the OS (Operating System) that is [Windows Vista (registered trademark) provided as basic software (operating system) by Microsoft Corp.. As shown in FIG. 1, the information processing apparatus 1 includes a filter setup professing unit 6 and an RSS information processing unit 7. Further, the information processing apparatus 1 includes, in addition to the filter setup professing unit 6 and the RSS information processing unit 7, a command analyzing unit 8 defined as an input interface, a screen display processing unit 9 defined as an output interface and a storage device 10 constructed of a hard disk, a RAM (Random Access Memory), etc. Moreover, the information processing apparatus 1 has a personal computer information auto-correcting function 11, an individual information input function 12 and a LAN-connection oriented communication function 13. Note that the information processing apparatus 1 is not limited to the PC-based configuration but may be constructed of a mobile information terminal such as a PDA (Personal Digital Assistant) and a mobile Moreover, the information processing apparatus 1 is, though based on the premise that the information processing apparatus 1 operates on the [Windows Vista (registered trademark)] serving as the OS, not limited to the personal computer that uses this basic software (Windows Vista) as the OS.

The filter setup professing unit 6 is configured in such a way that the CPU executes the computer program. The filter setup processing unit 6 includes an information auto-collecting unit 14, an information input unit 15 and an information integration processing unit 16, and manages a process of transferring, via the storage device 10 to the RSS information processing unit 7, attribute information used when extracting useful information defined as should-be-provided-to-the-user information from within an RSS feed distributed mainly from the Internet server 5.

The information auto-collecting unit 14 acquires the attribute information about the respective component devices of the information processing apparatus 1 and a version of the software from the personal computer information auto-correcting function 11. The information auto-collecting unit 14 acquires the attribute information upon receiving a command from a user and a trigger occurring based on a predetermined time schedule. The information auto-collecting unit 14 acquires the attribute information, if related to, e.g., the hard disk storage device, such as a name of a manufacturer (maker), a model number, a manufacture number and a manufacture date (date, month and year) from the ROM provided in the hard disk storage device. The personal computer information auto-correcting function 11 acquires the attribute information from the respective devices within the information processing apparatus 1 in response to a request from the CPU by linking up the CPU with the individual devices in the information processing apparatus 1.

The information input unit 15 acquires, from the individual information input function 12, the attribute information defined as individual information such as favorites of information sites that are frequently browsed by the user. The information input unit 15 acquires, in the same way as the information auto-collecting unit 14 does, the attribute information upon receiving the command from the user and the trigger occurring based on the predetermined time schedule. The information input unit 15, for example, inquires the user about a category of the want-to-browse RSS feed and prompts the user to input this category, or acquires items of information, as the attribute information, about keywords frequently inputted by the user to the search sites and about the categories of the information sites frequently browsed by the user. The individual information input function 12 inquires the user about the category of the want-to-browse RSS feed and prompts the user to input this category, and deduces the categories of the frequently-browsed sites from an information site browsing record of the WWW Browser.

The information integration processing unit 16 stores the storage device 10 with the attribute information acquired by the information auto-collecting unit 14 and the information input unit 15, and gets contents of the attribute information displayed on the output device 3 by transmitting the attribute information to the screen display processing unit 9.

The RSS information processing unit 7 is built up in such a way that the CPU executes the computer program. The RSS information processing unit 7, which includes an RSS feed acquiring unit 17 (corresponding to [a request unit]), a filter information acquiring unit 18 and a display information determination processing unit 19 (corresponding to [an extracting unit]), takes charge of a role of acquiring the RSS feed distributed chiefly from the Internet Server-5, referring to the attribute information transmitted via the storage device 10 from the filter setup professing unit 6, and thus extracting the useful information from within the RSS feed.

The RSS feed acquiring unit 17 acquires the RSS feed via the communication network 4 and the communication function 13 from the Internet server 5. The RSS feed acquiring unit 17 acquires the RSS feed upon receiving the command from the user and the trigger occurring based on the predetermined time schedule. The RSS feed acquiring unit 17 navigates one or two or more Websites that are pre-designated by the user, and requests each Website to transmit the RSS feed defined as meta data of update information of each Website. Then, the RSS feedacquiringunit 17 acquires the RSS feed transmitted from the Website in the Internet server 5. It is to be noted that first extracting condition information, in which to define an extracting condition when extracting the useful information, is transmitted together with the RSS feed sent from the Website. The RSS feed acquiring unit 17 transmits the acquired RSS feed and the first extracting condition information to the display information determination processing unit 19 via the filter information acquiring unit 18.

The filter information acquiring unit 18 requests the storage device 10 for the attribute information (filter information), and acquires the attribute information stored in the storage device 10. The filter information acquiring unit 18 transmits the acquired attribute information to the display information determination processing unit 19.

The display information determination processing unit 19, when acquiring the RSS feed, the first extracting condition information and the attribute information from the RSS feed acquiring unit 17 and from the filter information acquiring unit 18, extracts the useful information on the basis of these items of information. To be more specific, the display information determination processing unit 19, if the first extracting condition information satisfies the attribute information, extracts the contents of the RSS feed, as the should-be-provided-to**-**the-user useful information, associated with the first extracting condition information. Further, the display information determination processing unit 19, whereas if the first extracting condition information does not satisfy the attribute information, determines that the contents of the RSS feed associated with the first extracting condition information should not be provided to the user, and does not extract the contents thereof as the useful information.

The command analyzing unit 8 is the input interface. The command analyzing unit 8 analyzes the signal transmitted from the input device 2, and transfers the command given from the user to the filter setup professing unit 6 and the RSS information processing unit 7.

The screen display processing unit 9 is the output interface. The screen display processing unit 9 analyzes the signal transmitted from the RSS information processing unit 7, and provides various items of information to the user via the output device 3. The screen display processing unit 9 displays a content of the RSS feed in an information display space of a sidebar gadget of [Windows Vista (registered trade mark)].

The storage device 10 is constructed of a hard disk, a RAM (Random Access Memory), etc. The storage device 10 including a local DB (database) saves attribute data transmitted from the filter setup professing unit 6, and also saves the RSS feed and Website information acquired from the Website by the RSS information processing unit 7.

The communication function 13 is a communication interface. The communication function 13 links up the communication network 4 and the RSS information processing unit 7 with each other, thereby enabling the information processing apparatus 1 to access the Website of the Internet server 5 via the communication network 4.

Note that the input device 2 is constructed of a keyboard, a mouse, etc, and sends the command of the user to the CPU via the command analyzing unit 8. Further, the output device 3 is constructed of a display device, and displays image signals, as a picture, transmitted from the CPU via the screen display processing unit 9. Moreover, the communication network 4 is defined as an Internet communication network built up by an optical fiber, a telephone line and so on. Further, the Internet server 5 is a server computer administered and operated by an Internet provider, an enterprise, etc, and includes a variety of Websites accessible via the Internet.

Moreover, information distribution services taking a variety of forms exist on the Websites, some of the Websites provide the RSS feed defined as metadata of the update information of the Website, and some do not provide. Such being the case, a premise in the present embodiment is that the information processing apparatus 1 accesses the Websites each providing the RSS feed. Further, another premise is that the Website includes a user DB (database) containing user registration information of the user who employs the information processing apparatus 1. Note that the information processing apparatus 1 can access the Websites that do not provide the RSS feed.

### <Procesing Flow>

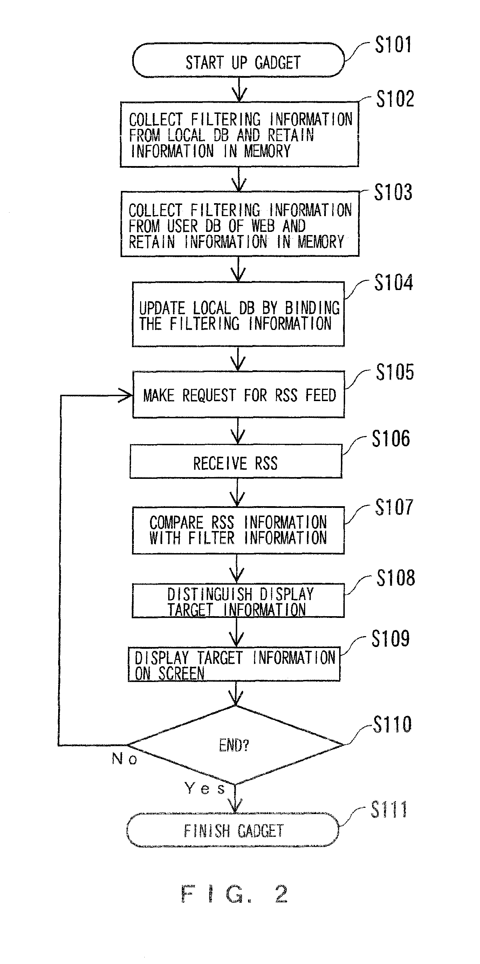

Next, a processing flow of the information processing apparatus 1 will be explained. FIG. 2 is a processing flowchart of the information processing apparatus 1. The processing flow of the information processing apparatus 1 will be described with reference to the flowchart in FIG. 2.

The user starts up the sidebar gadget of [Windows Vista (registered trademark)] on the information processing apparatus 1 (S101). The sidebar gadget is started up by selecting a program name concerned from within a program menu displayed on the output device 3 in a way that operates the mouse of the input device 2.

When the sidebar gadget is started up, one or two or more applications are executed, and these applications are displayed in the display space for the sidebar gadget provided on the screen of the output device 3. The sidebar gadget executes an RSS reader program and a time display program. The sidebar gadget displays a content of the RSS feed acquired by the RSS reader program and the present time etc acquired by the clock (time) display program.

In the sidebar gadget, when starting up the RSS reader program, the CPU executes the program, thereby realizing the variety of functions of the filter setup professing unit 6 and the RSS information processing unit 7.

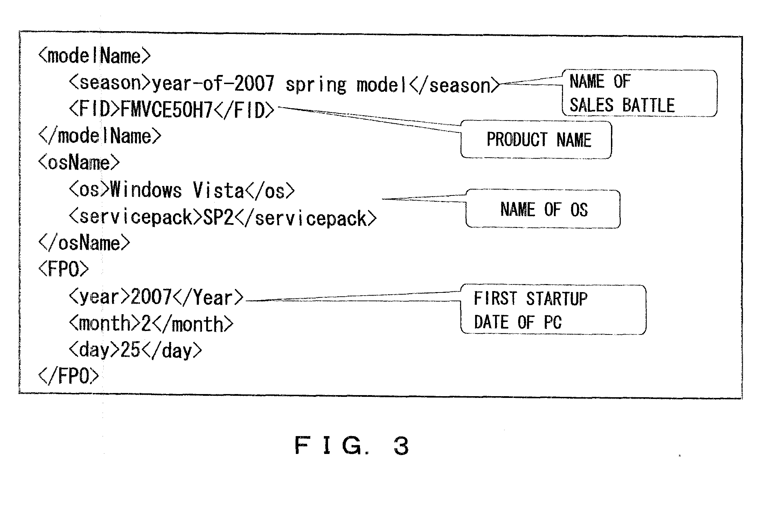

Next, the filter information acquiring unit 18, upon receiving the command from the user and a predetermined time schedule or a trigger that triggers the acquisition of the update information of the Website such as the startup of the sidebar gadget, acquires the attribute information (filtering information) from the local DB (S102). FIG. 3 shows one example of the attribute information acquired by the filter information acquiring unit 18. The attribute information shown in FIG. 3 is described in XML (Extensible Markup Language). The filter information acquiring unit 18 transmits the acquired attribute information to the display information determination processing unit 19. Note that the attribute information accumulated in the local DB is, it is assumed, pre-accumulated by inputting the information when the user purchased the information processing apparatus 1 and getting the information collected by the information auto-collecting unit 14.

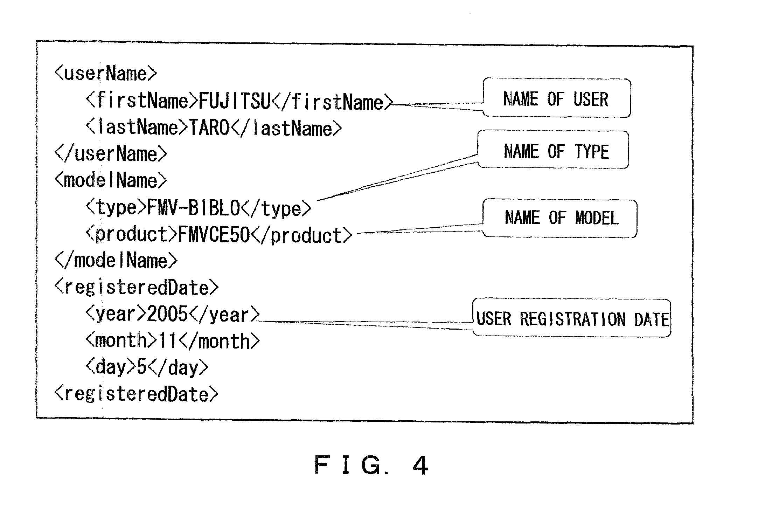

Next, the RSS feed acquiring unit 17, in the same way as the filter information acquiring unit 18 does, when receiving the trigger that triggers the acquisition of the update information of the Website, acquires the user registration information (filtering information) from the Website of the Internet server 5 via the communication function 13 and the communication network 4 (S103). FIG. 4 shows one example of the user registration information acquired by the RSS feed acquiring unit 17. The user registration information shown in FIG. 4 is described by the XML in the same way as the attribute information is.

Subsequently, the RSS feed acquiring unit 17 transmits the acquired user registration information to the storage device 10 and updates the information in the local DB (S104).

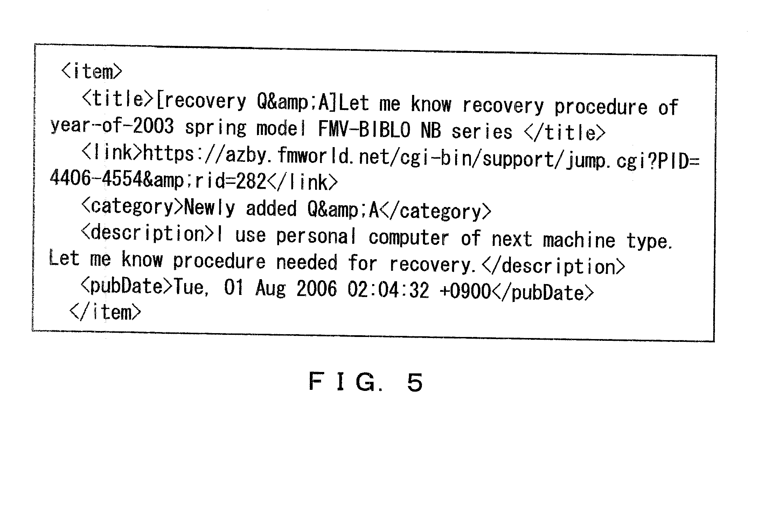

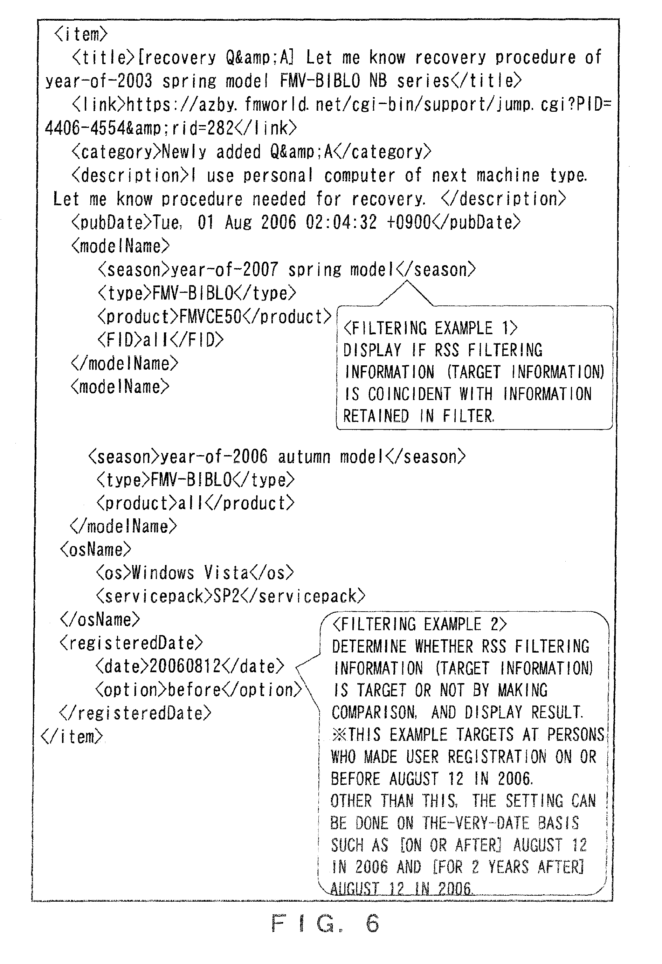

Next, the RSS feed acquiring unit 17 requests the Website of the Internet server 5 to transmit the RSS feed (S105), and acquires the RSS feed from the Website (S106). It is to be noted that the RSS feed acquiring unit 17, when requesting the transmission of the RSS feed, makes a request for transmitting first extracting condition information (filtering information) together. The RSS feed acquiring unit 17 transmits the RSS feed and the first extracting condition information, acquired from the Website to the display information determination processing unit 19. One example of a content of the RSS feed is given in FIG. 5. Note that FIG. 5 shows one example of the content of the RSS feed. Further, FIG. 6 shows one example of a content of the first extracting condition information attached to the content of the RSS feed. The RSS feed shown in FIG. 5 and the first extracting condition information shown in FIG. FIG. 6 are described in the XML format in the same way as the attribute information is.

The display information determination processing unit 19 compares the attribute information accumulated in the local DB within the storage device 10, the content of the RSS feed acquired from the Website and the first extracting condition information (S107).

The display information determination processing unit 19 extracts the useful information based on the attribute information and the first extracting condition information (S108) . Namely, if the extracting condition described in the first extracting condition information satisfies the attribute information, the display information determination processing unit 19 extracts the content of the RSS feed related to the first extracting condition information as the useful information that should be provided to the user. Further, whereas if the extracting condition described in the first extracting condition information does not satisfy the attribute information, the display information determination processing unit 19 determines that there is no necessity for providing the user with the content of the RSS feed related to the first extracting condition information, and does not extract the content thereof as the useful information. The display information determination processing unit 19 transmits the useful information, extracted as the information that should be provided to the user, to the screen display processing unit 9.

A specific example of the extracting process in S108 , which is executed by the display information determination processing unit 19, will be explained based on the examples of the attribute information, the user registration information, the content of the RSS feed and the first extracting condition information that are illustrated in FIGS. 3 - 6.

The first extracting condition information shown in FIG . 6 represents the following conditions.
[Condition 1: FMV-BIBLO·FMVCE50 as the spring model in 2007, or FMV·BIBLO all types as autumn/winter model in 2006]
[Condition 2: Running OS is Windows Vista SP2.]
[Condition 3: User registration date is on and after august 12 in 2006.]

Further, the attribute information shown in FIG. 3 has the following contents.
[Attribute 1: FMVCE50H7 as spring model in 2007.]
[Attribute 2: Running OS is Windows Vista SP2.]
[Attribute 3: First startup date of PC is February 25 in 2007.]

Moreover, the user registration information shown in FIG. 4 represents the following contents.
[Registration information 1: User name is Fujitsu Taro.]
[Registration information 2: FMV-BIBLO·FMVCE50.]
[Registration information 3: User registration date is November 5 in 2005.]

Accordingly, the display information determination processing unit 19, since the contents of "Attribute 1" and of "Registration information 1" satisfy "Condition 1", "Attribute 2" satisfies "Condition 2" and "Registration information 3" satisfies "Condition 3", extracts the contents as the useful information that should be provided to the user who employs the information processing apparatus 1.

The screen display processing unit 9, when acquiring the data about the content of the RSS feed transmitted from the display information determination processing unit 19, gets the content of the RSS feed displayed on the output device 3 (S109). If in the case of the example described above, the RSS feed having such a content that [Newly added Q and A. I use a personal computer of a next machine type. Let me know a procedure needed for recovery.] is displayed on the output device 3.

The RSS information processing unit 7 determines whether or not there is a necessity for newly acquiring the RSS feed from the Website (S110). The RSS information processing unit 7 determines, from the time schedule specifying an update interval of the RSS feed and from existence or non-existence of a request given from the user, whether or not there is a necessity for continuing the acquisition of the RSS feed. The RSS information processing unit 7, when determining that there is no necessity for reacquiring the RSS feed, terminates the sidebar gadget (S111) . While on the other hand, the RSS information processing unit 7, when determining that there is the necessity for reacquiring the RSS feed, requests again the Website for the RSS feed (S105), and repeats the processes S 105 through S110.

### <Effects>

From what has been discussed so far, according to the information processing apparatus 1 in the present embodiment, only the content of the RSS feed, which is useful to the user, can be displayed. Hence, even when the multiplicity of Websites is registered in the RSS reader, according to the information processing apparatus 1 in the present embodiment, only the content, useful to the user, of the RSS feed defined as the metadata of the update information of the Website is displayed on the output device 3, and hence there is no possibility of causing a confusion about a necessity or non-necessity for the version-up by the user's being provided with a tremendous quantity of information. As to such an effect, the product like the personal computer, which is manufactured with the same name in the same model and employs multiple versions of software and devices depending on the manufacturing time etc, exhibits the extremely great effect in notifying of the version-up and so on.

Note that in the information processing apparatus 1 described above, the information (corresponding to [the first extracting condition information]) on the extracting condition when extracting the useful information is based on the premise of being distributed from the Website, however, the operation is not limited to this scheme. Namely, the information (corresponding to [second extracting condition information]) on the extracting condition may be previously stored in the storage device 10 of the information processing apparatus 1. The information processing apparatus 1 extracts the content of the RSS feed satisfying the condition defined in the second extracting condition information stored in the storage device 10, and thus extracts the content of the RSS feed as the useful information.

### <Storage Medium Readable by Computer>

A program for making a computer, other machines, devices (which will hereinafter be referred to as the computer etc) actualize any one of the functions given above can be recorded on a recording medium readable by the computer etc. Then, the computer etc is made to read and execute the program on this recording medium, whereby the function can be provided.

Herein, the recording medium readable by the computer etc connotes a recording medium capable of storing information such as data and programs electrically, magnetically, optically, mechanically or by chemical action, which can be read from the computer etc. Among these recording mediums, for example, a flexible disc, a magneto-optic disc, a CD-ROM, a CD-R/W, a DVD, a DAT, an 8 mm tape, a memory card, etc are given as those demountable from the computer etc.

Further, a hard disc, a ROM (Read-Only Memory), etc are given as the recording mediums fixed within the computer etc.

## Claims

1. An information processing apparatus comprising:
a request unit requesting, when receiving a trigger etc occurring based on a command from a user or a predetermined time schedule, a Website originating information via a communication network to transmit an RSS feed defined as metadata of update information of the Website;
an extracting unit referring to the content of the RSS feed transmitted from the Website and extracting the useful information as the information that should be provided to the user from within the RSS feed; and
a display unit displaying the extracted useful information.

2. The information processing apparatus according to claim 1, further comprising an attribute acquiring unit acquiring attribute information, corresponding to the user employing said information processing apparatus or devices building up said information processing apparatus, such as a software version, a device version or favorites of information sites frequently browsed by the user,
wherein the RSS feed transmitted by said Website contains first extracting condition information in which to define an extracting condition when extracting the useful information, and
said extracting unit collates the content of the RSS feed, the attribute information and the first extracting condition information with each other, and, if the extracting condition of the first extracting condition information satisfies the attribute information, extracts, as the useful information, the content of the RSS feed corresponding to the first extracting condition information.

3. The information processing apparatus according to claim 1 or 2, further comprising an storage unit stored with second extracting condition information in which to define an extracting condition when extracting the useful information,
wherein said extracting unit collates the content of the RSS feed with the second extracting condition information, and extracts, as the useful information, the content of the RSS feed that satisfies the extracting condition of the second extracting condition information.

4. An information processing method comprising:
a request step of requesting, when receiving a trigger etc occurring based on a command from a user or a predetermined time schedule, a Website originating information via a communication network to transmit an RSS feed defined as metadata of update information of the Website;
an extracting step of referring to the content of the RSS feed transmitted from the Website and extracting the useful information as the information that should be provided to the user from within the RSS feed; and
a display step of displaying the extracted useful information.

5. The information processing method according to claim 4, further comprising an attribute acquiring step of acquiring attribute information, corresponding to the user employing said information processing apparatus or devices building up said information processing apparatus, such as a software version, a device version or favorite of information sites frequently browsed by the user,
wherein the RSS feed transmitted by said Website contains first extracting condition information in which to define an extracting condition when extracting the useful information, and
said extracting step includes collating the content of the RSS feed, the attribute information and the first extracting condition information with each other, and, if the extracting condition of the first extracting condition information satisfies the attribute information, extracting, as the useful information, the content of the RSS feed corresponding to the first extracting condition information.

6. The information processing method according to claim 4 or 5, wherein said extracting step includes collating the content of the RSS feed with second extracting condition information, stored in a storage unit, in which to define an extracting condition when extracting the useful information, and extracting, as the useful information, the content of the RSS feed that satisfies the extracting condition of the second extracting condition information.

7. An information processing program making a computer execute:
a request step of requesting, when receiving a trigger etc occurring based on a command from a user or a predetermined time schedule, a Website originating information via a communication network to transmit an RSS feed defined as metadata of update information of the Website;
an extracting step of referring to the content of the RSS feed transmitted from the Website and extracting the useful information as the information that should be provided to the user from within the RSS feed; and
a display step of displaying rhe extracted useful information.

8. The information processing program according to claim 7, further making said computer execute an attribute acquiring step of acquiring attribute information, corresponding to the user employing said information processing apparatus or devices building up said information processing apparatus, such as a software version, a device version or favorites of information sites frequently browsed by the user,
wherein the RSS feed transmitted by said Website contains first extracting condition information in which to define an extracting condition when extracting the useful information, and
said extracting step includes collating the content of the RSS feed, the attribute information and the first extracting condition information with each other, and, if the extracting condition of the first extracting condition information satisfies the attribute information, extracting, as the useful information, the content of the RSS feed corresponding to the first extracting condition information.

9. The information processing program according to claim 7 or 8, wherein said extracting step includes collating the content of the RSS feed with second extracting condition information, stored in a storage unit, in which to define an extracting condition when extract the useful information, and extracting, as the useful information, the content of the RSS feed that satisfies the extracting condition of the second extracting condition information.
